# EUROPÄISCHE PATENTSCHRIFT

(11) **EP 2 897 922 B1**
(45) Veröffentlichungstag und Bekanntmachung des Hinweises auf die Patenterteilung: **27.07.2016**
(21) Anmeldenummer: 13762477.1
(22) Anmeldetag: 13.09.2013
(51) Int. Cl.: C04B 103/00, C04B 111/28, C04B 26/12, C04B 26/16, C08J 9/30, F16L 59/02, C04B 38/10, C08J 9/00, C04B 103/40, C08J 9/12

(54) **SYSTEM UND VERFAHREN ZUR HERSTELLUNG EINES ORTSCHAUMS**
METHOD AND SYSTEM FOR CREATING AN IN-SITU FOAM
SYSTÈME ET PROCÉDÉ DE FABRICATION DÝUNE MOUSSE MOULÉE SUR PLACE

(30) Priorität: 24.09.2012 EP 12185665
(43) Veröffentlichungstag der Anmeldung: 29.07.2015
(73) Patentinhaber: BASF SE, 67056 Ludwigshafen am Rhein (DE)
(72) Erfinder: SIMANCAS, Kimberly, 70372 Stuttgart (DE); BENTEN, Rebekka von, 68159 Mannheim (DE); HÄHNLE, Hans-Joachim, 67435 Neustadt (DE); HAHN, Klaus, 67281 Kirchheim (DE); NESTLE, Nikolaus, 69123 Heidelberg (DE); ULANOVA, Tatiana, 67063 Ludwigshafen (DE); ASSMANN, Jens, 68165 Mannheim (DE)
(74) Vertreter: BASF IP Association
(86) Internationale Anmeldenummer: PCT/EP2013/068996
(87) Internationale Veröffentlichungsnummer: WO 2014/044604

(56) Entgegenhaltungen:
- WO-A1-2009/109537
- WO-A1-2009/133046
- WO-A1-2011/051170

## Beschreibung

Die vorliegende Erfindung betrifft ein System und Verfahren zur Herstellung eines Ortschaums sowie dessen Verwendung.

Ortschäume auf Basis von Urethanen, härtbaren Aminoplastkondensaten oder Phenolharzen sind seit langem bekannt. Ein Nachteil ist, dass sie brennbar sind und beim Trocknen schwinden. Die DE 25 42 471 beschreibt ein Verfahren zur Herstellung schwundarmer Schaumstoffe aus härtbaren Aminoplastkondensaten in Gegenwart von schwund- und brennbarkeitsmindernden Umsetzungsprodukten aus ortho-Borsäure und mehrwertigen Alkoholen oder Polyalkylenglykolethern mehrwertiger Alkohole.

Die WO 2011/051170 beschreibt ein Verfahren zur Herstellung eines elastischen anorganischen-organischen Hybridchaumstoffes mit guten Wärme- und Schallabsorptionseigenschaften. Der Schaumstoff wird durch Verschäumen einer Mischung aus Gips oder Kaolin, einer wässrigen Polyvinylaminlösung, einer flüchtigen organischen Verbindung als Treibmittel, einem Emulgator und Vernetzer erhalten wird. Aufgrund der verwendeten Treibmittel ist ein bündiges Ausschäumen von Hohlräumen nicht möglich.

Die WO 2009/109537 beschreibt ein Verfahren zur Herstellung eines Schaumstoffes mit hoher Flammfestigkeit und geringer Dichte durch Härtung eines Schlag- oder Treibschaums aus einer wässrigen Zusammensetzung, die Alkalisilikate, Tenside und eine wässrige Polymerdispersion enthält. Die Filmbildung durch Trocknung der Polymerdispersion ist für die Anwendung als Ortschaum zu langsam.

JP-A 11-27931 beschreibt einen flammfesten Sprühschaum auf Basis von Polyurethanen, der durch Vermischen unter Druck einer wässrigen Phosphorsäurelösung und gegebenenfalls anorganischen Füllstoffen mit einer Mischung aus NCO-Gruppen enthaltenden Urethan-Präpolymeren und Calciumcarbonat erhalten wird.

Aus der DE 199 12 988 C1 sind Füllstoff enthaltende Schaumstoffe auf Basis von Polyurethanen und deren Eignung als Wärme- und Isolierstoffe sowie als Brandschutzschäume bekannt.

WO 2008/007187 beschreibt einen Hybridschaumstoff auf Basis von Polyurethanen und anorganischen Füllstoffen mit guten thermischen und akustischen Isolierereigenschaften, Durchlässigkeit und Flammenschutz, sowie gute Haftung auf Beton.

Werden Ortschäume auf Basis von Polyurethanen zur Verfüllung von nahezu geschlossenen Hohlräumen verwendet, kann die Bildung von CO₂ bei der Reaktion der Komponenten zu einem so hohen Druckaufbau in den Hohlräumen führen, dass die Wandungen gesprengt werden.

Aufgabe der vorliegenden Erfindung war es, den genannten Nachteilen abzuhelfen und ein System und Verfahren zur Herstellung eines Ortschaums bereitzustellen, der schrumpfarm, emissionsarm und in kurzer Zeit schnittfest ist. Des Weiteren sollte er ein bündiges Ausschäumen auch von unregelmäßigen und/oder nahezu geschlossenen Hohlräumen ermöglichen und für den Brandschutz einen geringen Brennwert, bevorzugt geringer als 3,0 MJ/kg, sehr geringe Rauchentwicklung und kein brennendes Abtropfen aufweisen.

Die Aufgabe wurde durch ein System zur Herstellung eines Ortschaums gelöst, welches die Komponenten
- 50 bis 98 Gew.-%,: bevorzugt 85 bis 95 Gew.-% ein oder mehrere anorganische Füllstoffe A),
- 1 bis 48 Gew.-%,: bevorzugt 2 bis 10 Gew.-% ein oder mehrere wasserlösliche, kationische Polymere B)
- 0,5 bis 48 Gew.-%,: bevorzugt 1 bis 10 Gew.-% ein oder mehrere Tenside C)
- 0,01 bis 5 Gew.-%,: bevorzugt 0,1 bis 1 Gew.-% ein oder mehrere mit den Polymeren B) reaktionsfähige Vemetzer D)
- 0 bis 20 Gew.-%,: bevorzugt 1 bis 10 Gew.-% ein oder mehrere Additive E),
umfasst, wobei sich die Gewichtsprozente von den Komponenten A) bis E) auf Feststoff bzw. den nichtwässrigen Anteil beziehen und die Summe aus A) bis E) 100 Gew.-% ergeben.

### Komponente A)

Als Komponente A) umfasst das System ein oder mehrere anorganische Füllstoffe, insbesondere Mineralien, beispielsweise kolloidale Kieselsäure, Silikate, wie Aluminiumsilikate, insbesondere Kaolin Al₂O₃ * 2SiO₃ * 2 H₂O oder Kaolinit Al₄[(OH)₈Si₄O₁₀], Sulfate wie Calciumsulfat, insbesondere wasserhaltige Sulfate Ca[SO₄] • n H₂O mit n = 1/2, 2 (Gips), oder Mischungen davon. Besonders bevorzugt werden Calciumsulfat, REA-Gips aus Rauchgasentschwefelungsanlagen, Aluminiumsilikate, insbesondere Kaolin oder Mischungen davon eingesetzt.

Die Komponente A wird vorzugsweise als natürlich vorkommendes Mineral eingesetzt und ist vorzugsweise nicht oberflächenbehandelt. Der mittlere Partikeldurchmesser der Komponente A) liegt bevorzugt im Bereich von 0,1 bis 10 µm. Die Dichte der Komponenten A) liegt vorzugsweise im Bereich von 2 bis 3 kg/m³.

### Komponente B)

Als Komponente B) umfasst das System ein oder mehrere kationische Polymere. Bevorzugt sind solche, die primäre oder sekundäre Aminogruppen tragen. Das Polymer B) ist wasserlöslich, d.h. die Löslichkeit in Wasser beträgt mindestens 5 Gew.-%, bevorzugt mindestens 10 Gew.-% unter Normalbedingungen (20°C, 101,3 kPa) bei pH 7. Es wird in Form einer wässrigen Lösung, bevorzugt in einer Konzentration von mindestens 50 g/l, insbesondere mindestens 100 g/l eingesetzt.

Beispiele für kationische Polymere B sind solche, die durch Polymerisation ein oder mehrerer Monomeren, ausgewählt aus Vinylamin, Allylamin, Ethylenimin, Vinylimidazol, N-alkyl aminoethylacrylat, N-alkyl aminoethylmethacrylat, N-alklyamino propylacrylamid, N-alklyamino propylacrylamid. N,N-dialkyl aminoethylacrylat, N,N-dialkyl aminoethylmethacrylat, N,N-dialkylamino propylacrylamid, N,N-dialklyamino propylacrylamid, erhalten werden.

Ebenfalls anwendbar sind Polymere, die prim. oder sec. Aminogruppen tragen und die auf nachwachsenden Rohstoffen wie Sacchariden basieren wie z.B. Chitosan.

Geeignet sind insbesondere die in WO 2010/145956 beschrieben Vinylamideinheiten enthaltenden Polymerisate bzw. die durch anschließende teilweise oder vollständige Abspaltung von Formylgruppen aus dem in das Polymerisat einpolymerisierten N-Vinylformamid unter Bildung von Aminogruppen erhältlichen Copolymerisate.

Bevorzugt sind Polymere, die durch vollständige oder partielle Hydrolyse von Polymeren erhalten werden, die durch Polymerisation von mindestens einem Monomeren der Formel 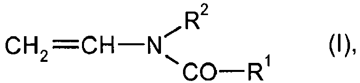 in der R¹, R² = H oder C₁- bis C₆-Alkyl bedeuten, erhältlich sind. Bevorzugte Monomere der Formel (I) sind N-Vinylformamid, N-Vinyl-N-methylformamid, N-Vinylacetamid, N-Vinyl-N-methylacetamid, N-Vinyl-N-ethylacetamid, N-Vinyl-N-methylpropionamid und N-Vinylpropionamid.

Besonders bevorzugt sind Polyvinylamin oder Poly(vinylamin-vinylformamide)-Copolymere.

Die Ladungsdichten der kationischen Polymeren B (ohne Gegenionen) liegen in der Regel im Bereich von 1 und 23 meq/g, bevorzugt im Bereich von 3 und 14 meq/g, besonders bevorzugt im Bereich von 4 und 11 meq/g. Die gewichtsmittleren Molekulargewichte liegen üblicherweise im Bereich von 50.000 bis 2.000.000, bevorzugt im Bereich von 100 000 bis 1 000 000, besonders bevorzugt im Bereich von 300.000 bis 500.000. Besonders bevorzugt sind Polyinylamine und deren Copolymere die unter der Marke Lupamin^{®} vertrieben werden. Beispiele sind Lüpamin^{®}9030, Lupamin^{®}9050, Lupamin^{®}9095.

### Komponente C)

Als Komponente C) umfasst das System ein oder mehrere Tenside, die zur Bildung und Stabilisierung des Schaums eingesetzt werden. Als Tenside können anionische, kationische, nichtionische oder amphotere Tenside verwendet werden.

Geeignete anionische Tenside sind Diphenylenoxidsulfonate, Alkan- und Alkylbenzolsulfonate, Alkylnaphthalinsulfonate, Olefinsulfonate, Alkylethersulfonate, Alkylsulfate, Alkylethersulfate, alpha-Sulfofettsäureester, Acylaminoalkansulfonate, Acylisethionate, Alkylethercarboxylate, N-Acylsarcosinate, Alkyl- und Alkyletherphosphate. Als nichtionische Tenside können Alkylphenolpolyglykolether, Fettalkoholpolyglykolether, Fettsäurepolyglykolether, Fettsäurealkanolamide, EO/PO-Blockcopolymere, Aminoxide, Glycerinfettsäureester, Sorbitanester und Alkylpolyglucoside verwendet werden. Als kationische Tenside kommen Alkyltriammoniumsalze, Alkylbenzyldimethylammoniumsalze und Alkylpyridiniumsalze zum Einsatz.

Besonders bevorzugt werden Mischungen aus anionischen und nichtionischen Tensiden eingesetzt.

### Komponente D)

Als Komponente D) umfasst das System einen oder mehrere Vernetzer D), die mit der Komponente B) reagieren können. Bevorzugt werden als Vernetzer D) Aldehyde, Isocyanate, Epoxide, Acrylate, Acrylamide, Ester, Divinylsulfonate, besonders bevorzugt Ethandial verwendet.

### Komponente E)

Als Komponente E) kann das System ein oder mehrere Additive umfassen. Als Additive kommen insbesondere Verbindungen in Frage, die den Schrumpf oder die Wasseraufnahme des Ortschaums verringern. Zur Verringerung des Schrumpf kann beispielsweise Dimethyldihydrophyethylharnstoff eingesetzt werden. Die Wasseraufnahme kann beispielsweise durch selbstvernetzende Styrol-Acrylat-Dispersionen verringert werden.

Zur besseren Verschäumbarkeit können viskositätssteigernde Additive, z.B. Stärke, modifizierte Zellulosen oder Polyvinylalkohol zugesetzt werden.

Das System enthält keine leichtflüchtigen organischen Treibmittel, wie niedrigsiedende C₄-C₈-Kohlenwasserstoffe, Alkohol, Ether, Ketone und Ester.

Für einen guten Brandschutz sollte der Anteil an organischen Bestandteilen in dem Ortschaum möglichst gering sein. Bevorzugt wird ein System eingesetzt, bei dem der Anteil an organischen Bestandteilen so gering ist, dass die Ortschäume den Brandtest A2 nach DIN 4102 bestehen und einen Feuerwiderstand F30 bei einer Dicke von 50mm und F60 bei einer Dicke von 100mm aufweisen. Die Summe der Feststoffe (nichtwässrigen Anteile) der Komponenten B), C), D) und E) liegt daher bevorzugt im Bereich von 2 bis 15 Gew.-%, besonders bevorzugt im Bereich von 5 bis 11 Gew.-%, bezogen auf den Ortschaum.

Gegenstand der Erfindung ist auch ein Verfahren zur Herstellung eines Ortschaums unter Verwendung der oben beschriebenen Komponenten A) bis E) des Systems und Aufschäumen mit einem Gas oder einer Gasmischung.

Der Ortschaum kann durch Vermischen und Aufschäumen einer wässrigen Zusammensetzung aus den Komponenten A) bis E) mit einem Gas oder einer Gasmischung unter Druck und Einwirkung mechanischer Kräfte, wie Rühren oder Scherung mittels statischen Mischern erhalten werden. Es ist auch möglich, die wässrige Zusammensetzung durch das Dispergieren eines inerten Gases in Form von feinen Gasblasen aufzuschäumen. Das Eintragen von Gasblasen in die wässrige Zusammensetzung kann mit Hilfe von Schlag-, Schüttel-, Rühr-, Peitsch-Stator- oder Rotorvorrichtungen erfolgen. Bevorzugt werden Mischer mit Stator- und/oder Rotorelementen eingesetzt.

Als Gas oder Gasmischung werden vorzugsweise inerte Gase, wie Stickstoff, Argon, Kohlenstoffdioxid oder Sauerstoff eingesetzt. Besonders bevorzugt wird Luft verwendet.

Zur Herstellung des Ortschaums wird bevorzugt aus den Komponenten A) bis D) eine wässrige Suspension mit einem Feststoffgehalt im Bereich von 30 bis 50 Gew.-% hergestellt und durch Eintragen von Druckluft mit einem Druck im Bereich von 100 bis 2000 kPa aufgeschäumt.

Bevorzugt umfasst das Verfahren die Stufen
(a) Eintragen eines Gases oder einer Gasmischung in eine wässrigen Lösung oder Suspension, die mindestens die Komponente C) enthält,
(b) gegebenenfalls Einmischen weiterer Komponenten A) bis E) zusammen oder getrennt über ein oder mehrere Mischelemente,
(c) Aufschäumen der wässrigen Suspension, die mindestens die Komponenten A) bis C) enthält,
(d) gegebenenfalls Zugabe der Komponente D),
(e) Trocknung auf einen Wassergehalt unter 0,5 Gew-%.

In Stufe (a) wird vorzugsweise Druckluft mit einem Druck im Bereich von 100 bis 2000 kPa eingetragen.

Das Einmischen der Komponenten A) bis E) kann zusammen oder getrennt über ein oder mehrere Mischelement erfolgen. Bevorzugt werden die Komponenten B) und D) des Systems bzw. die diese Komponenten enthaltenden Vormischungen separat gelagert und erst vor Ort zur Herstellung des Ortschaums vermischt. Vorzugsweise erfolgt die Eintragung über verschiedene Dosierstellen der Vorrichtung.

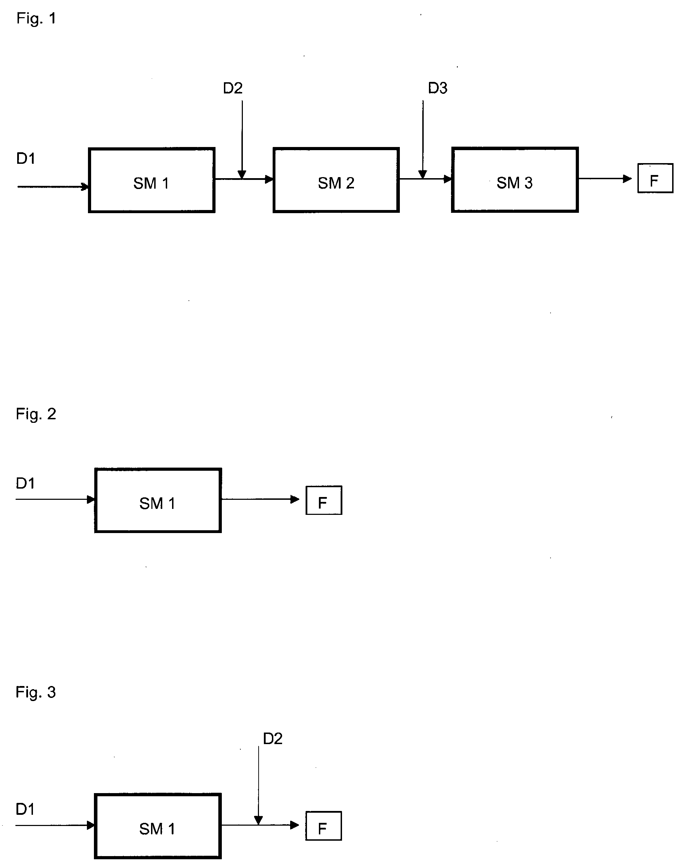

Der Ortschaum kann in handelsüblichen Schäumvorrichtungen für Ortschäume hergestellt werden. Geeignete Vorrichtungen zur Herstellung des Ortschaums (F) sind in den Abbildungen Fig.1 - 3 schematisch dargestellt.

Die Vorrichtung gemäß Fig. 1 besteht aus drei statischen Mischern (SM 1, SM 2 und SM 3) mit drei Dosiereinrichtungen (D1, D2 und D3). Vorzugweise werden die Komponenten C) und das Gas oder der Gasmischung über die Dosiereinrichtung (D1), die Komponenten A), B) und E) gemeinsam über die Dosiereinrichtung (D2) und die Komponente D) über die Dosiereinrichtung (D3) zugegeben.

Die Vorrichtung gemäß Fig. 2 besteht aus nur einem statischen Mischer (SM 1) mit der Dosiereinrichtungen (D1) für die Zugabe der wässrigen Zusammensetzung aus Komponenten A) bis E).

Die Vorrichtung gemäß Fig. 3 entspricht der Vorrichtung gemäß Fig. 2 mit einer zusätzlichen Dosiereinrichtung (D2). Hier können Die Komponenten A), B), C) und gegebenenfalls E) gemeinsam über die Dosiereinrichtung D1 und getrennt davon die Komponente D) über die Dosiereinrichtung D2 zugegeben werden.

In der Regel werden die Komponenten B) - D) in Form wässriger Lösungen eingesetzt. Zur Anpassung der Viskosität können einzelnen Komponenten oder Mischungen der Komponenten weites Wasser zugesetzt werden. Bevorzugt weist die wässrige Suspension in Stufe (c) einen Feststoffgehalt im Bereich von 5 bis 50 Gew.-%, besonders bevorzugt von 10 bis 30 Gew.-% auf.

Gegenstand der Erfindung ist auch ein Ortschaum, der nach dem erfindungsgemäßen Verfahren erhältlich ist. Je nach eingesetzter Verschäumungsapparatur, Anzahl der Mischelemente und Einstellung des Drucks kann die Dichte in weiten Bereichen eingestellt werden. Vorzugsweise weist der Ortschaum eine Dichte im Bereich von 10 bis 300 kg/m³ auf.

In der Regel weist der nach dem erfindungsgemäßen Verfahren erhältliche Ortschaum gegenüber einem mit Treibmittel getriebenen Treibschaum gleicher Zusammensetzung einen niedrigeren mittleren Porendurchmesser und eine engere Porengrößenverteilung auf. Die homogenere Schaumstruktur des Ortschaums zeigt sich auch in einer geringeren Wärmeleitfähigkeit. Der erfindungsgemäße Ortschaum weist bevorzugt einen mittleren Porendurchmesser unter 1 mm auf. Die Verteilungsbreite der Porendurchmesser liegt bevorzugt im Bereich von 0,2 - 1 mm. Demgegenüber liegt der mittlere Porendurchmesser beim Treibschaum im Bereich von 1 - 5 mm und die Verteilungsbreite der Porendurchmesser im Bereich von 1 - 4 mm.

Der Ortschaum weist vorzugsweise einen Brennwert, bestimmt nach DIN 51900 Teil 3, von kleiner als 3,0 MJ/kg, bevorzugt im Bereich von 0,1 bis 2,9 MJ/kg auf.

Die Wasseraufnahme nach Lagerung der Schaumproben in einer Klimakammer bei 85% Feuchtigkeit bis zur Gewichtskonstanz beträgt bevorzugt 1 bis 35 Gew.-%, besonders bevorzugt 5 bis 20 Gew.-%.

Die Schrumpf nach Lagerung der Schaumproben in einer Klimakammer bei 85% Feuchtigkeit bis zur Gewichtskonstanz beträgt bevorzugt 0,1 bis 10%, besonders bevorzugt 1 bis 7 %.

Der Ortschaum ist an Luft bei 20°C bevorzugt innerhalb eines Zeitraums im Bereich von 5 bis 50 sec, besonders bevorzugt im Bereich von 10 bis 25 sec nach dem Aufschäumen schnittfest. Der Ortschaum eignet sich zur Wärmedämmung und zum Ausfüllen von Hohlräumen und Hohlkörpern, insbesondere zum Dämmen von Hohlräumen in Bauwerken, beispielsweise durch Füllen von zweischaligen Mauerwerken. Des Weiteren eignet sich der Ortsschaum zur Innendämmung von Bauwerken, besonders von Wänden, Decken, Kriechkellerdecken und Dächern, zum Ausschäumen von Hohlblocksteinen zur Verbesserung der Dämmleistung, zum Dämmen von Rohrleitungen und Technikkomponenten, zum brandsicheren Verschluss von Mauerdurchbrüchen für beispielsweise Leitungsdurchführungen, sowie zum Ausfüllen von brandsicheren Sektionaltoren, Türen und Fensterprofilen. Der Ortschaum eignet sich auch als Brandriegel oder Teil eines Brandriegels in Gebäuden oder zum Ausfüllen von Hohlräumen und Hohlkörpern.

Der Ortsschaum kann für diese und andere Anwendungen sowohl allein als auch in Kombination mit einem oder mehreren anderen Dämmmaterialien in Form von Platten oder Flocken eingesetzt werden. Geeignete Dämmmaterialien sind geschäumte Kunststoffe, wie Partikelschaumstoffe aus weißem oder grauem, expandierbarem Polystyrol (EPS, Styropor®, Neopor®) oder Styrolextrusionsschaumstoffe (XPS, Styrodur®) oder Polyurethanschaumstoffe (PUR), geschäumte Elastomere auf Basis von Neopren-kautschuk oder EPDM, anorganische Dämmstoffe, wie Mineralfasern, Steinwolle, Glaswolle, Glasschaumgranulate, Schaumglas, Blähperlite oder Silikatschaumstoffe, Naturdämmstoffe wie, Schafwolle, Flachs, Holzweichfaserplatten, Holzwolleleichtbauplatten, Kork, Kokosmatten oder Zellulose. Bevorzugt kann der erfindungsgemäße Ortschaum zusammen mit Mineralwolle eingesetzt werden.

### Beispiele

### Einsatzstoffe:

| | |
|---|---|
| Komponente A1 | REA-Gips (aus einer Rauchgas-Entschwefelungs-Anlage), CaSO₄.2H₂O. Calcium sulfate dihydrate |
| Komponente A2.1 | Kaolin (Fa. Fluka, nicht calciniertes Aluminiumsilikat, Al₂Si₂O₅(OH)₄, Pharma grade) |
| Komponente A 2.2 | Ansilex® 93 (calcinierter Kaolin, nicht oberflächenbehandelt, mittlere Partikelgröße 0,9µm) |
| Komponente B1.1 | Lupamin® 9050 (Copolymer aus Vinylformamide und Vinylamin (1:1) mit hohem Molekulargewicht; 10%ige Lösung in Wasser, pH ca. 8, mit Chlorid als Gegenion) |
| Komponente B1.2 | Lupamin® 9070 (Copolymer aus Vinylformamide und Vinylamin (3:7) mit hohem Molekulargewicht; 10%ige Lösung in Wasser, pH ca. 8, mit Chlorid als Gegenion) |
| Komponente B1.3 | Lupamin® 9050 (Copolymer aus Vinylformamide und Vinylamin (1:1) mit hohem Molekulargewicht; 10%ige Lösung in Wasser, pH ca. 8, mit Benzoe-+Amidosulfonsäure (1:1) als Gegenion) |
| Komponente C1 | Tensidmischung aus anionischem und nichtionischem Tensid: Disponil FES 32 (Natriumlaurylpolyethersulfat) und Lutensol AT80 (Fettsäureethoxylat) im Gewichtsverhältnis 1:3; |
| Komponente C2 | AmphosolCS-50 (Cocamidopropyl Hydroxysultaine) |
| Komponente D1 | Glyoxal (Ethandial, Oxalaldehyd) |
| Komponente D2 | Waterpoxy® 1422 (Epoxy resiin dispersion in water. 53-57%. 2-6 Pa.s) |
| Komponente E1 | Durapox® NT (Zwei-Komponenten-Reaktionsharzsystem mit Epoxid als Harzkomponente und einer Mischung aus Isophorondiamin und N-(3-Aminopropyl)-N-dodecyl-propan-1,3-diamin als Härterkomponente) |
| Komponente E2 | Acronal® 5044 (wässrige selbstvernetzbare Dispersion eines Copolymers aus einem Acrylsäureester und Styrol, Feststoffgehalt 55 Gew.-%, Filmbildungstemperatur Tg -15°C, Partikelgröße ∼400nm, pH 6,5-8,5, Viscosität 10-100 mPas. |
| Komponente E3 | Fixapret® NF: Dimethyldihydroxyethylharnstoff |
| Komponente E4 | Melamin (rein, Pulver) |

### Beispiele 1 - 10

Für die Beispiele 1 - 10 wurde in einem Aufbau gemäß Fig. 1 mit drei statischen Mischelementen (SM 1, SM 2, SM 3) mit Durchmessern zwischen 5 und 10 mm eine wässrige Lösung der Komponente C mit Druckluft (2000 kPa) im ersten Mischelement SM 1 verschäumt. Über das zweite Mischelement SM 2 wurde anschließend eine Mischung der Komponenten A1, A2, B und E und gegebenenfalls zusätzlichem Wasser zur Einstellung des Feststoffgehaltes der Suspension zugemischt. Zuletzt wurde im dritten Mischelement SM 3 die Komponente D zudosiert und homogenisiert. Durch die Beaufschlagung des Aufbaus mit Druckluft vor dem ersten Mischelement wird der Schaum durch die weiteren Mischelemente zur Austrittdüse gefördert. Die Trocknung erfolgte an Luft bei 20°C.

### Beispiele 11 - 16

In Beispiel 11 und 16 wurden die Komponente A) bis D) und gegebenenfalls zusätzlichem Wasser zur Einstellung des Feststoffgehaltes der Suspension zusammen in einer Vorrichtung gemäß Fig. 2 mit einem statischen Mischelement (SM 1) mit einem Durchmesser von 25 mm bei einem Betriebsdruck von 500 kPa mit Druckluft verschäumt. Die Trocknung erfolgte an Luft bei 20°C.

In Tabelle 1 und 2 sind die Komponenten A bis E zur Herstellung der Ortschäume, jeweils bezogen auf den nichtwässriger Anteil, in Gewichtsprozent und die Eigenschaften des getrockneten Ortschaums zusammengestellt. Der Feststoffgehalt (nichtwässrige Anteil) in Gewichtsprozent bezieht sich auf die Mischung der Komponenten vor dem Verschäumen (Beispiele 11 und 16).

Die Dichte der Schaumprobe wurde bestimmt durch Wiegen und Messen von Länge, Breite und Höhe. Der Brennwert wurde laut Norm DIN 51900 Teil 3 bestimmt. Für die Bestimmung der Wasseraufnahme (Gew.-%) wurden die Schaumproben in einer Klimakammer bei 85% Feuchtigkeit bis zur Gewichtskonstanz gelagert. Die Schnittfestigkeit nach der Aufschäumung wurde mit einem Messer und einem Chronometer bestimmt. Eine Probe gilt als schnittfest, wenn ein Stück der Probe mit dem Messer abgetrennt und abgehoben werden kann, ohne dass dieses Stück die Form verliert. Für die Bestimmung des Schrumpfens wurden die Schaumproben in einer Klimakammer bei 85% Feuchtigkeit bis zur Gewichtskonstanz gelagert und die Dimensionsänderungen gemessen.

**Tabelle 1 Einsatzstoffe für die Ortschäume der Beispiele 1 - 10 in Gewichtsprozent, bezogen auf den nichtwässrigen Anteil der Komponenten und Eigenschaften der getrockneten Ortschäume**

| **Komponente** | **B1** | **B2** | **B3** | **B4** | **B5** | **B6** | **B7** | **B8** | **B9** | **B10** |
|---|---|---|---|---|---|---|---|---|---|---|
| **A1** | 55,7 | 32,6 | 58,7 | 58,7 | 62,2 | 58,7 | 58,9 | 60,1 | 59,6 | 59,8 |
| **A2.1** | 27,8 | 16,3 | 29,4 | 29,4 | 31 | | 29,3 | 30,0 | 29,7 | 29,8 |
| **A2.2** | | | | | | 29,4 | | | | |
| **B1.1** | 8,3 | 4,9 | 8,8 | 8,8 | 5 | 8,8 | 4,7 | 7,5 | 3,1 | 9 |
| **B1.2** | | | | | | | | | | |
| **B1.3** | | | | | | | | | | |
| **C1** | 7,6 | 45,8 | 2,5 | 2,5 | 1,4 | 2,5 | 1,3 | 1,3 | 1,3 | 1,3 |
| **C2** | | | | | | | | | | |
| **D1** | 0,6 | 0,3 | 0,6 | 0,6 | 0,2 | 0,6 | 0,1 | 0,2 | 0,2 | 0,01 |
| **D2** | | | | | | | | | | |
| **E1** | | | | | | | | 0,9 | | |
| **E2** | | | | | | | | | 6,1 | |
| **E3** | | | | | 0,3 | | | | | |
| **E4** | | | | | | | 5,6 | | | |
| **Feststoffgehalt Suspension [Gew.-%]** | 40 | 26 | 34 | 30 | 45 | 30 | 47 | 41 | 48 | 43 |
| **Eigenschaften Ortschaum** | | | | | | | | | | |
| **Dichte [kg/m³]** | 240,9 | 40,2 | 172,3 | 95,2 | 50,7 | 95,6 | 94,2 | 97,1 | 95,2 | 95,2 |
| **Brennwert [MJ/kg]** | >3 | >3 | <3 | <3 | <3 | <3 | <3 | <3 | <3 | <3 |
| **Wasseraufnahme [Gew.-%]** | 32 | 33 | 32 | 31 | 33 | 32 | 20 | 15 | 8 | 14 |
| **Schnittfest [sec]** | 20 | 22 | 21 | 21 | 22 | 20 | 21 | 19 | 22 | 208 |
| **Schrumpf [%]** | 8 | 7 | 7 | 8 | 2 | 1 | 7 | 8 | 7 | 7 |
| **Wärmeleitf. λ [mW/m*K]** | | | | | 40 | | | | | |

**Tabelle 2 Einsatzstoffe für der Ortschäume der Beispiele 11 - 16 in Gewichtsprozent, bezogen auf den nichtwässrigen Anteil der Komponenten, und Eigenschaften der getrockneten Ortschäume**

| **Komponente** | **B11** | **B12** | **B13** | **B14** | **B15** | **B16** |
|---|---|---|---|---|---|---|
| **A1** | 62,4 | 62,4 | 62,4 | 62,4 | 62,4 | 62,4 |
| **A2.1** | 31,1 | 31,1 | 31,1 | 31,1 | 31,1 | 31,1 |
| **A2.2** | | | | | | |
| **B1.1** | 5 | 5 | | | 5 | 5 |
| **B1.2** | | | 5 | | | |
| **B1.3** | | | | 5 | | |
| **C1** | 1,4 | 1,4 | 1,4 | 1,4 | | 1,4 |
| **C2** | | | | | 1,4 | |
| **D1** | 0,2 | 0,2 | 0,2 | 0,2 | 0,2 | |
| **D2** | | | | | | 0,2 |
| **E1** | | | | | | |
| **E2** | | | | | | |
| **E3** | | | | | | |
| **E4** | | | | | | |
| **Feststoffgehalt Suspension [Gew.-%]** | 45 | 32 | 32 | 32 | 32 | 32 |
| **Eigenschaften Ortschaum** | | | | | | |
| **Dichte [kg/m³]** | 35,2 | 26,9 | 36,1 | 32,7 | 25,8 | 35,9 |
| **Brennwert [MJ/kg]** | < 3 | < 3 | < 3 | < 3 | < 3 | < 3 |
| **Wasserauf-nahme [Gew.-%]** | 16 | 9 | 33 | 17 | 33 | 25 |
| **Schnittfest [sec]** | 18 | 21 | 830 | 22 | 20 | 21 |
| **Schrumpf [%]** | 7 | 8 | 9 | 8 | 7 | 9 |
| **Wärmeleitf. A [mW/m*K]** | | 36 | | | | |

## Patentansprüche

1. System zur Herstellung eines Ortschaums, bestehend aus den Komponenten
50 bis 98 Gew.-% ein oder mehrere anorganische Füllstoffe A),
1 bis 48 Gew.-% ein oder mehrere wasserlösliche, kationische Polymere B)
0,5 bis 48 Gew.-% ein oder mehrere Tenside C)
0,01 bis 5 Gew.-% ein oder mehrere mit den Polymeren B) reaktionsfähige Vernetzer D)
0 bis 20 Gew.-% ein oder mehrere Additive E),
wobei sich die Gewichtsprozente von den Komponenten A) bis E) auf die nichtwässrigen Anteile beziehen und die Summe aus A) bis E) 100 Gew.-% ergeben.

2. System nach Anspruch 1, **dadurch gekennzeichnet, dass** es als kationisches Polymer ein Polyvinylamin oder ein Poly(vinylamin-vinylformamid)-Copolymer enthält.

3. System nach Anspruch 1 oder 2, **dadurch gekennzeichnet dass** es als Tensid C) eine Mischung aus anionischem und nichtionischem Tensid enthält.

4. System nach einem der Ansprüche 1 bis 3, **dadurch gekennzeichnet, dass** es als Vernetzer D) ein Dialdehyd enthält.

5. System nach einem der Ansprüche 1 bis 4, **dadurch gekennzeichnet, dass** als anorganische Füllstoffe A) Calciumsulfat, Aluminiumsilikate oder Mischungen davon eingesetzt werden.

6. Verfahren zur Herstellung eines Ortschaums unter Verwendung der Komponenten des Systems gemäß einem der Ansprüche 1 bis 5 und Aufschäumen mit einem Gas oder einer Gasmischung.

7. Verfahren nach Anspruch 6, **dadurch gekennzeichnet, dass** aus den Komponenten A) bis D) eine wässrige Suspension mit einem Feststoffgehalt im Bereich von 30 bis 50 Gew.-% hergestellt wird und durch Eintragen von Druckluft mit einem Druck im Bereich von 100 bis 2000 kPa aufgeschäumt wird.

8. Verfahren nach Anspruch 6 umfassend die Stufen
(a) Eintragen eines Gases oder einer Gasmischung in eine wässrigen Lösung oder Suspension, die mindestens die Komponente C) enthält,
(b) gegebenenfalls Einmischen weiterer Komponenten A) bis E) zusammen oder getrennt über ein oder mehrere Mischelemente,
(c) Aufschäumen der wässrigen Suspension, die mindestens die Komponenten A) bis C) enthält,
(d) gegebenenfalls Zugabe der Komponente D),
(e) Trocknung auf einen Wassergehalt unter 0,5 Gew.-%.

9. Verfahren nach Anspruch 8, **dadurch gekennzeichnet, dass** in Stufe (a) Druckluft mit einem Druck im Bereich von 100 bis 2000 kPa eingetragen wird.

10. Verfahren nach Anspruch 8 oder 9, **dadurch gekennzeichnet, dass** die wässrige Suspension in Stufe (c) einen Feststoffgehalt im Bereich von 30 bis 50 Gew.-% aufweist.

11. Ortschaum, welcher an Luft bei 20°C innerhalb eines Zeitraums im Bereich von 5 bis 50 sec nach dem Aufschäumen schnittfest ist, erhältlich nach dem Verfahren gemäß einem der Ansprüche 6 bis 10.

12. Ortschaum nach Anspruch 11, **dadurch gekennzeichnet, dass** er eine Dichte im Bereich von 10 bis 300 kg/m³ aufweist.

13. Ortsschaum nach Anspruch 11 oder 12, **dadurch gekennzeichnet, dass** er einen Brennwert kleiner als 3,0 MJ/kg aufweist.

14. Verwendung des Ortschaums nach einem der Ansprüche 11 bis 13 zur Wärmedämmung.

15. Verwendung des Ortschaums nach einem der Ansprüche 11 bis 13 zum Ausfüllen von Hohlräumen und Hohlkörpern.

16. Verwendung des Ortschaums nach einem der Ansprüche 11 bis 13 als Brandriegel oder Teil eines Brandriegels.

## Claims

1. A system for producing an in-situ foam, consisting of the components
| | |
|---|---|
| from 50 to 98% by weight | of one or more inorganic fillers A), |
| from 1 to 48% by weight | of one or more water-soluble, cationic polymers B), |
| from 0.5 to 48% by weight | of one or more surfactants C), |
| from 0.01 to 5% by weight | of one or more crosslinkers D) which are capable of reacting with the polymers B), |
| from 0 to 20% by weight | of one or more additives E), |
where the percentages by weight of the components A) to E) are based on the nonaqueous fraction and the sum of A) to E) is 100% by weight.

2. The system according to claim 1 which comprises a polyvinylamine or a poly(vinylamine-vinylformamide) copolymer as cationic polymer.

3. The system according to claim 1 or 2 which comprises a mixture of anionic and nonionic surfactant as surfactant C).

4. The system according to any of claims 1 to 3 which comprises a dialdehyde as crosslinker D).

5. The system according to any of claims 1 to 4, wherein calcium sulfate, aluminum silicates or mixtures thereof are used as inorganic fillers A).

6. A process for producing an in-situ foam using the components of the system according to any of claims 1 to 5 and foaming by means of a gas or a gas mixture.

7. The process according to claim 6, wherein an aqueous suspension having a solids content in the range from 30 to 50% by weight is prepared from the components A) to D) and foamed by introducing compressed air having a pressure in the range from 100 to 2000 kPa.

8. The process according to claim 6, which comprises the steps
(a) introduction of a gas or a gas mixture into an aqueous solution or suspension comprising at least the components C),
(b) optionally mixing-in of further components A) to E) either together or separately by means of one or more mixing elements,
(c) foaming of the aqueous suspension comprising at least the components A) to C),
(d) optionally addition of the component D),
(e) drying to a water content below 0.5% by weight.

9. The process according to claim 8, wherein compressed air having a pressure in the range from 100 to 2000 kPa is introduced in step (a).

10. The process according to claim 8 or 9, wherein the aqueous suspension in step (c) has a solids content in the range from 30 to 50% by weight.

11. An in-situ foam which is firm in air at 20°C within a period in the range from 5 to 50 seconds after foaming and which can be obtained by the process according to any of claims 6 to 10.

12. The in-situ foam according to claim 11 which has a density in the range from 10 to 300 kg/m³.

13. The in-situ foam according to claim 11 or 12 which has a heat of combustion of less than 3.0 MJ/kg.

14. The use of the in-situ foam according to any of claims 11 to 13 for thermal insulation.

15. The use of the in-situ foam according to any of claims 11 to 13 for filling hollow spaces and hollow bodies.

16. The use of the in-situ foam according to any of claims 11 to 13 as fire barrier or part of a fire barrier.

## Revendications

1. Système pour la fabrication d'une mousse moulée sur place, constitué par les composants :
50 à 98 % en poids d'une ou de plusieurs charges inorganiques A)
1 à 48 % en poids d'un ou de plusieurs polymères cationiques solubles dans l'eau B)
0,5 à 48 % en poids d'un ou de plusieurs tensioactifs C)
0,01 à 5 % en poids d'un ou de plusieurs agents de réticulation D) réactifs avec les polymères B)
0 à 20 % en poids d'un ou de plusieurs additifs E),
les pourcentages en poids des composants A) à E) se rapportant à des proportions non aqueuses et la somme de A) à E) étant de 100 % en poids.

2. Système selon la revendication 1, **caractérisé en ce qu'**il contient en tant que polymère cationique une polyvinylamine ou un copolymère de poly(vinylaminevinylformamide).

3. Système selon la revendication 1 ou 2, **caractérisé en ce qu'**il contient en tant que tensioactif C) un mélange d'un tensioactif anionique et non ionique.

4. Système selon l'une quelconque des revendications 1 à 3, **caractérisé en ce qu'**il contient en tant qu'agent de réticulation D) un dialdéhyde.

5. Système selon l'une quelconque des revendications 1 à 4, **caractérisé en ce que** du sulfate de calcium, des silicates d'aluminium ou leurs mélanges sont utilisés en tant que charges inorganiques A).

6. Procédé de fabrication d'une mousse moulée sur place, par utilisation des composants du système selon l'une quelconque des revendications 1 à 5, et moussage avec un gaz ou un mélange de gaz.

7. Procédé selon la revendication 6, **caractérisé en ce qu'**une suspension aqueuse ayant une teneur en solides dans la plage allant de 30 à 50 % en poids est fabriquée à partir des composants A) à D), et moussée par introduction d'air comprimé à une pression dans la plage allant de 100 à 2 000 kPa.

8. Procédé selon la revendication 6, comprenant les étapes suivantes :
(a) l'introduction d'un gaz ou d'un mélange de gaz dans une solution ou suspension aqueuse qui contient au moins le composant C),
(b) éventuellement l'incorporation d'autres composants A) à E) ensemble ou séparément par un ou plusieurs éléments de mélange,
(c) le moussage de la suspension aqueuse qui contient au moins les composants A) à C),
(d) éventuellement l'ajout du composant D),
(e) le séchage à une teneur en eau de moins de 0,5 % en poids.

9. Procédé selon la revendication 8, **caractérisé en ce qu'**à l'étape (a), de l'air comprimé à une pression dans la plage allant de 100 à 2 000 kPa est introduit.

10. Procédé selon la revendication 8 ou 9, **caractérisé en ce que** la suspension aqueuse à l'étape (c) présente une teneur en solides dans la plage allant de 30 à 50 % en poids.

11. Mousse moulée sur place, qui est résistante à la coupe dans l'air à 20 °C pendant une durée dans la plage allant de 5 à 50 s après le moussage, pouvant être obtenue par le procédé selon l'une quelconque des revendications 6 à 10.

12. Mousse moulée sur place selon la revendication 11, **caractérisée en ce qu'**elle présente une densité dans la plage allant de 10 à 300 kg/m³.

13. Mousse moulée sur place selon la revendication 11 ou 12, **caractérisée en ce qu'**elle présente un pouvoir calorifique inférieur à 3,0 MJ/kg.

14. Utilisation de la mousse moulée sur place selon l'une quelconque des revendications 11 à 13 pour l'isolation thermique.

15. Utilisation de la mousse moulée sur place selon l'une quelconque des revendications 11 à 13 pour le remplissage de cavités et de corps creux.

16. Utilisation de la mousse moulée sur place selon l'une quelconque des revendications 11 à 13 en tant que pare-feu ou partie d'un pare-feu.
